# EUROPÄISCHE PATENTSCHRIFT

(11) **EP 1 719 604 B1**
(45) Veröffentlichungstag und Bekanntmachung des Hinweises auf die Patenterteilung: **02.05.2012**
(21) Anmeldenummer: 06004676.0
(22) Anmeldetag: 08.03.2006
(51) Int. Cl.: B29C 51/16, B29C 51/06, B29C 51/42, B29C 63/02, B27N 7/00, B29C 63/04, B29C 51/10, B29C 69/00

(54) **Verfahren zur Beschichtung von Werkstücken**
Method for lining of objects
Méthode pour le revêtement d'objets

(30) Priorität: 02.05.2005 DE 102005020852
(43) Veröffentlichungstag der Anmeldung: 08.11.2006
(73) Patentinhaber: Robert Bürkle GmbH, 72250 Freudenstadt (DE)
(72) Erfinder: Huber, Reinhard, 72250 Freudenstadt-Dietersweiler (DE)
(74) Vertreter: Lemcke, Brommer & Partner

(56) Entgegenhaltungen:
- WO-A1-02/072335
- WO-A1-02/098394
- WO-A1-03/041945
- US-A- 5 324 382
- US-A- 5 624 523

## Beschreibung

Die Erfindung betrifft ein Verfahren zur mehrseitigen Beschichtung von Werkstücken mit Folie gemäß den Merkmalen im Oberbegriff von Patentanspruch 1.

Ein derartiges Verfahren ist durch die US 5,324,382 bekannt geworden. Dabei wird die Folie mit Beginn ihrer Beheizung vom Werkstück abgehoben und auf eine vorbestimmte Temperatur erhitzt. Sodann wird die Folie in Anlage mit dem Werkstück gebracht und mittels Unterdruck auch an die Seitenflächen des Werkstückes gedrückt.

Hauptanwendungsfall der vorliegenden Erfindung ist das Beschichten dreidimensionaler Möbelteile, die nicht nur an ihrer Front, sondern auch an den umlaufenden Seitenflächen mit einer Kunststofffolie, einem Furnier oder dergleichen beschichtet werden sollen. Nachfolgend wird nur von einer Folie gesprochen, ohne dass damit eine Beschränkung der Erfindung gemeint ist. Das Beschichten erfolgt durch Anwendung von Wärme und Druck in einer Presse, wobei meist mehrere Werkstücke gleichzeitig der Presse zugeführt werden, um deren Kapazität optimal auszunutzen. Die Werkstücke können dabei mittels einer Palette der Presse zugeführt und auf dem unteren Pressenteil, das meist ein spezielles Auflagersystem aufweist, abgelegt werden, worauf sie gemeinsam beschichtet werden. Nach dem Verlassen der Presse werden die Werkstücke dann durch Ausschneiden aus der zusammenhängenden Folie vereinzelt.

Damit die Kunststofffolie nicht nur an der Oberseite der Werkstücke, sondern auch an den davon zurückspringenden Seitenflächen, insbesondere an deren unteren Rand, gut angelegt und verbunden wird, müssen die Werkstücke von ihrer Unterlage distanziert werden. Dies geschieht entweder durch Distanzstücke, die unter jedem Werkstück mit Rücksprung gegenüber dessen Außenkontur einlegt werden oder durch Auflagerbolzen in Form von Hubbolzen, die in eine obere Position verfahren und dadurch die Werkstücke anheben. In beiden Fällen wird der untere Außenrand der Werkstücke frei und die Folie kann auch dort angelegt werden. Beispiele für Auflagersysteme mit Hubbolzen sind in der DE 197 18 561 und 198 36 219 der selben Anmelderin beschrieben. Selbstverständlich kann stattdessen aber auch mit anderen Auflagersystemen gearbeitet werden.

Damit die Beschichtung an der Oberseite, den Seitenflächen und den Kanten faltenfrei und plan von statten geht, empfiehlt es sich, dass die Folie während des Aufheizens nicht frei schwebt, sondern auf der Oberseite der Werkstücke aufliegt. Dadurch werden die Werkstücke an der Oberseite ebenfalls etwas erwärmt und der Temperaturunterschied zwischen Folie und Werkstück verringert. Die Folie ist dadurch eher in der Lage, die Dehnungsdifferenzen zwischen Werkstückoberseite und Werkstückseitenflächen elastisch auszugleichen, ohne dass Falten entstehen.

Untersuchungen der Anmelderin haben aber nun gezeigt, dass die bisher bekannten Beschichtungsverfahren bei Verwendung von Hochglanzfolien problematisch sind. Diese Folien neigen dazu, an Glanz einzubüßen und/oder unbefriedigende Beschichtungsqualität an den Seitenflächen zu liefern.

Der vorliegenden Erfindung liegt deshalb die Aufgabe zugrunde, die bekannten Beschichtungsverfahren dahingehend zu verbessern, dass auch empfindliche Folien, insbesondere Hochglanzfolien, eine einwandfreie Beschichtung ergeben.

Diese Aufgabe wird erfindungsgemäß durch die Merkmale im kennzeichnenden Teil von Patentanspruch 1 gelöst.

Durch diese Maßnahme lässt sich überraschend die Beschichtungsqualität, insbesondere bei Hochglanzfollen, deutlich verbessern. Ursächlich hierfür dürfte nach Erkenntnissen der Anmelderin folgendes sein: Durch die Anlage der Folie an der Werkstückoberseite während des Aufheizens stellt sich dort eine deutlich niedrigere Folientemperatur ein als in denjenigen Bereichen, wo die Folie keinen Kontakt mit Werkstücken hat. Dieser Temperaturunterschied in der Folie dürfte der Auslöser für die genannten Qualitätsprobleme sein. Er wird durch das Abheben der Folie von den Werkstückoberseiten deutlich reduziert, weil die abgehobenen Folienbereiche keine Wärme mehr an das Werkstück abgeben können und gleichzeitig näher an der Heizung zu liegen kommen.

Der gleiche Effekt ließe sich zwar auch dadurch erzielen, dass die Folie während des Aufheizens ständig von den Werkstücken distanziert gehalten wird; dann käme es aber beim Absenken der Folie auf die kalten Werkstücke zu einem Abschreckvorgang, der nach Untersuchungen der Anmelderin nachteilig für die Beschichtungsqualität ist. Demgegenüber führt das kurzzeitige Abheben der Folie zu dem Ergebnis, dass die Werkstücke vorgewärmt werden konnten, dass aber die Temperaturdifferenzen zwischen den Folienbereichen mit Werkstückkontakt und den Folienbereichen ohne Werkstückkontakt reduziert werden konnten. Insbesondere bewirken mehrere aufeinander folgende Abhebevorgänge, dass von Anfang an die Ausbildung von Temperaturdifferenzen in der Folie gebremst wird. Man erhält dadurch eine glänzende Folienoberfläche bei gleichzeitig gut ausgeformten Seitenflächen.

Das erwünschte Abheben der Folie erfolgt durch die Beaufschlagung der Folie durch Überdruck an der Unterseite und/oder Unterdruck an der Oberseite.

Die Zeitdauer, während der die Folie - ganz oder teilweise - abgehoben bleibt, hängt weitgehend von den Verfahrensparametern, insbesondere der Temperaturführung und von der Distanz ab, die die Folie nach dem Anheben noch von der Heizung entfernt ist. Zweckmäßig liegt der untere Wert für diese Zeitspanne bei zumindest 3 Sekunden. Es hat sich gezeigt, dass dies häufig schon ausreicht, um die gewünschte Nachheizung der zuvor von den Werkstücken gekühlten Folienbereiche zu realisieren.

Es liegt auch im Rahmen der Erfindung, die Folie an der Unterseite mit Warmluft zu beaufschlagen und dadurch den Temperaturausgleich innerhalb der Folie zu beschleunigen.

Die Beheizung der Folie von oben erfolgt zweckmäßig berührungslos durch Strahlung. In diesem Fall empfiehlt es sich, dass die Folie auch in angehobenem Zustand noch beabstandet zu der oberseitigen Heizung verläuft, weil die Strahlertemperatur andernfalls zu einer Überhitzung der Folie führt.

Erfolgt die Beheizung der Folie jedoch durch Kontakt an einer Heizplatte, so muss diese Heizplatte selbstverständlich ebenfalls eine Hubbewegung durchführen, um das Abheben der Folie von den Werkstücken zu gestatten.

Der Zeitpunkt für das Abheben der Folie kann ebenfalls variiert werden. Besonders günstig ist es, wenn die Folie am Ende der Heizphase abgehoben wird und unmittelbar danach das Anpressen an die Werkstück-Oberseite und - Seitenflächen erfolgt.

Grundsätzlich sollte die Folie aber während der Aufheizphase gezielt an die Werkstück-Oberseite herangedrückt werden, damit sie dort eine niedrigere Temperatur aufweist als in den Bereichen, wo die Folie keinen Kontakt mit Werkstücken hat.

Weitere Merkmale und Vorteile der Erfindung ergeben sich aus der nachfolgenden Beschreibung eines Ausführungsbeispieles und aus der Zeichnung; dabei zeigt:
- Figur 1: eine Gesamtansicht der Presse zur Durchführung des erfindungs- gemäßen Verfahrens;
- Figur 2: eine Ausschnittvergrößerung der den Pressspalt bildenden Pres- senteile in einem Vertikalschnitt;
- Figur 3: den gleichen Vertikalschnitt in einem zweiten Verfahrensstadium;
- Figur 4: den gleichen Vertikalschnitt in einem dritten Verfahrensstadium und
- Figur 5: den gleichen Vertikalschnitt in einem vierten Verfahrensstadium.

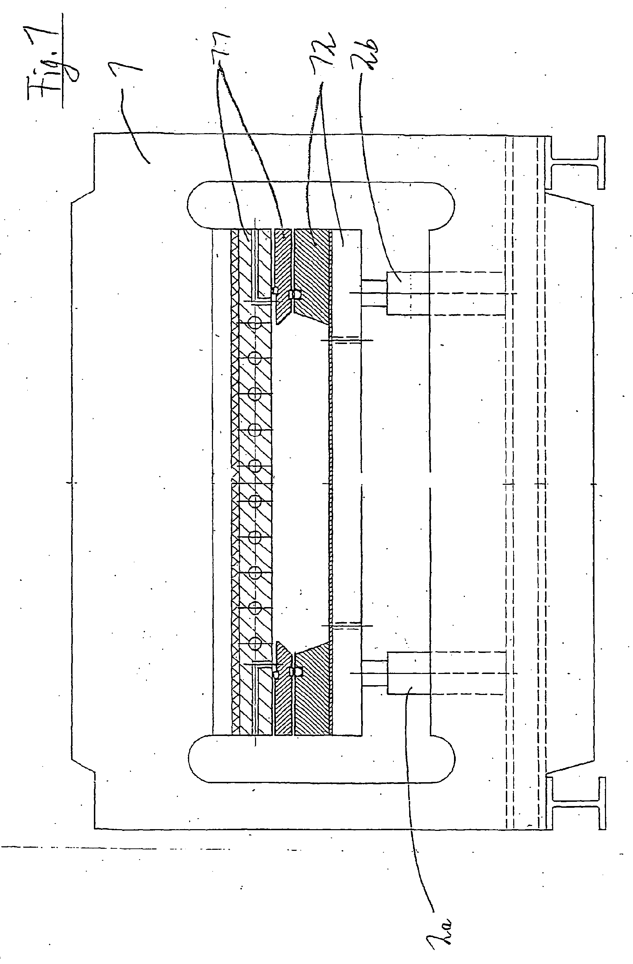

In Figur 1 ist eine Gesamtansicht der Presse zur Durchführung des erfindungsgemäßen Verfahrens dargestellt. Die Presse umfasst einen Pressenrahmen 1, an dem das Pressenoberteil 11 befestigt ist. Das Pressenunterteil 12 ist durch zwei Druckzylinder 2a und 2b mit dem Pressenrahmen 1 verbunden. Durch Ein- und Ausfahren der Druckzylinder 2a und 2b kann der Abstand zwischen dem Pressenunterteil 12 und dem Pressenoberteil 11 verändert und das Pressenunterteil gegen das Pressenoberteil gepresst werden.

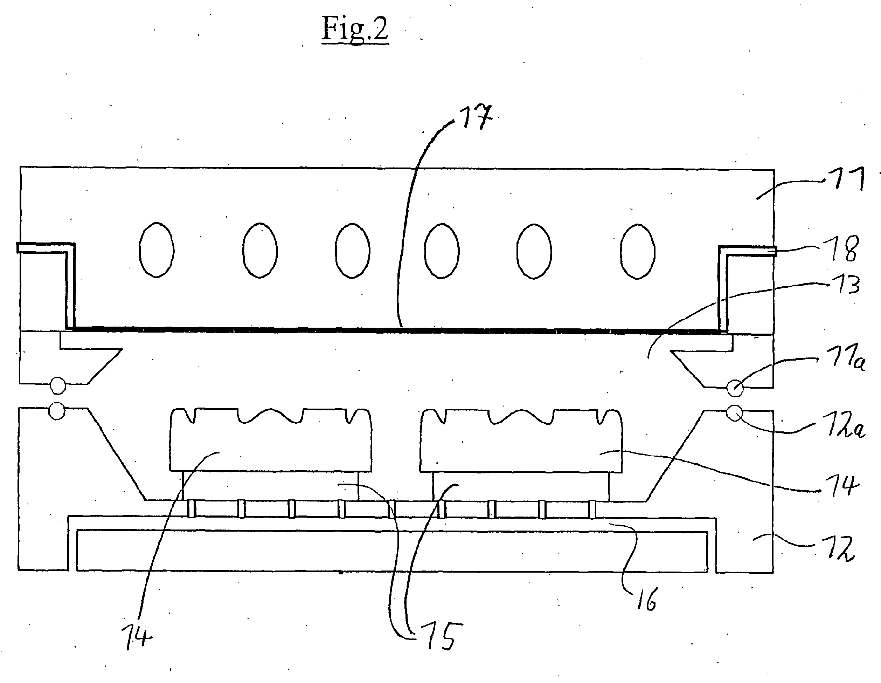

Die Figuren 2 bis 5 zeigen jeweils das Pressenoberteil 11 und das Pressenunterteil 12 in vergrößerter Darstellung. Beide Pressenteile bilden in zusammengefahrener Stellung einen Hohlraum 13 zur Aufnahme der zu beschichtenden Werkstücke 14. Die Werkstücke 14 liegen auf Auflageplatten 15, die gegenüber der Randkontur der Werkstücke 14 jeweils zurückspringen. Dadurch können die Werkstücke auch an ihren vertikalen Seitenflächen, insbesondere an deren unteren Kanten problemlos beschichtet werden.

Anstelle der gezeigten Auflageplatten 15 ist es auch möglich, die Werkstücke auf Hubbolzen zu lagern, die in eine obere Position verfahren werden können und dadurch die Werkstücke in die gezeigte Beschichtungsposition anheben. Solche Hubbolzen, die nicht von einem Werkstück bedeckt sind, bleiben hingegen in ihrer unteren Ruheposition, damit sie den Beschichtungsvorgang an den seitlichen Randflächen der Werkstücke nicht beeinträchtigen. Alternativ kann auch mit seitlich verstellbaren Auflagebolzen gearbeitet werden, die so verschoben werden können, dass sie jeweils unter einem Werkstück 14 zu liegen kommen.

Desweiteren erkennt man in den Figuren 2 bis 5, dass das untere Pressenteil 12 jeweils ein Kanalsystem 16 aufweist, das den Hohlraum 13 mit einer nicht gezeigten Unterdruck- oder Überdruckquelle verbindet.

Das Pressenoberteil 11 fungiert im wesentlichen als Heizplatte, die elektrisch oder auf andere Weise beheizt wird. An ihrer Unterseite weist sie eine gut Wärme leitende, schwarze Abstrahlplatte 17 auf, die über den gesamten Querschnitt nahezu die gleiche Temperatur aufweist.

Schließlich enthält auch das obere Pressenteil 11 ein Kanalsystem 18, um den Hohlraum 13 von oben mit Unterdruck oder Überdruck beaufschlagen zu können.

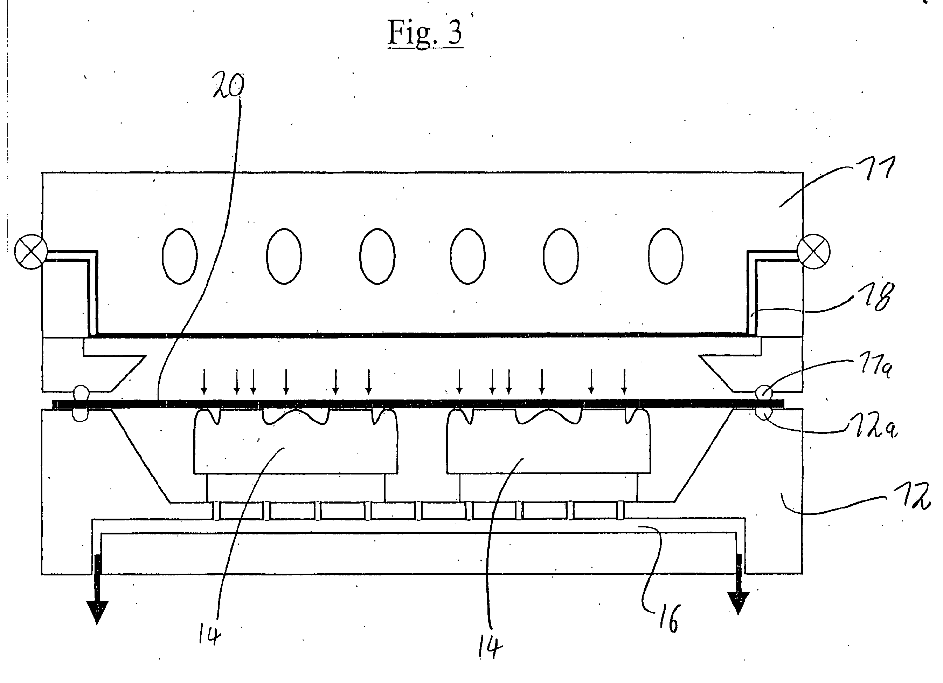

Figur 2 zeigt das Verfahrensstadium, bei dem die Werkstücke 14 bereits in den zunächst weit offenen Pressenspalt eingelegt worden sind und Pressenoberteil und Pressenunterteil anschließend nahe zusammengefahren sind. Vor dem Schließen wird die Beschichtungsfolie in den Pressspalt eingezogen. Anschließend wird die Presse geschlossen. Diesen Zustand zeigt Figur 3. Man erkennt dort die Beschichtungsfolie 20, die an ihren Rändern zwischen den am Pressenoberteil bzw. Pressenunterteil angeordneten Dichtungsrahmen 11a bzw. 12a gehalten wird. In ihrem mittleren Bereich liegt die Folie 20 hingegen schlaff auf den Werkstücken 14 auf. In diesem Verfahrensstadium erfolgt das Aufheizen der Folie. Um dabei einen definierten Wärmeübergang von der Folie auf die Werkstücke 14 herbeizuführen, empfiehlt es sich, die Folie entweder durch leichten Unterdruck im Kanalsystem 16 oder durch leichten Überdruck im Kanalsystem 18 an die Werkstücke anzudrücken.

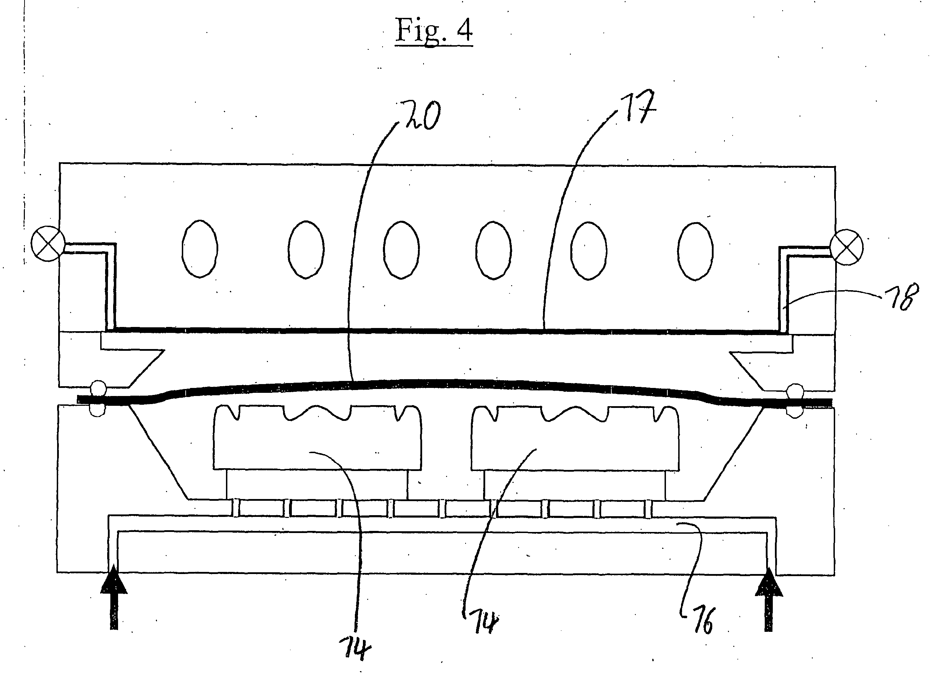

Wenn die Folie 20 die gewünschte Temperatur erreicht hat, so dass die an der Folienunterseite angebrachte Kleberschicht beginnt, reaktionsfähig zu werden oder vor Erreichen dieser Temperatur, wird der erfindungsgemäße Verfahrensschritt gemäß Figur 4 eingeleitet, nämlich ein kurzzeitiges Abheben der Folie 20 von den Werkstücken 14, wobei die Folie aber nicht in Kontakt mit der Heizfläche 17 kommt. Dieses Abheben erfolgt zweckmäßig durch Überdruckbeaufschlagung des unteren Kanalsystems 16, wie in Figur 4 angedeutet. Es liegt. aber auch im Rahmen, stattdessen oder zusätzlich den oberhalb der Folie 20 liegenden Hohlraum über das obere Kanalsystem 18 an Unterdruck anzuschließen.

Das Abheben der Folie 20 von den Werkstücken 14 erfolgt zweckmäßig während einer Zeitspanne von etwa 5 Sekunden bis etwa 10 Sekunden. Dies reicht aus, dass sich die stark unterschiedlichen Temperaturen zwischen den Folienbereichen, die zuvor mit den Werkstücken 14 in Kontakt standen und den angrenzenden Folienbereichen etwas ausgleichen. Die Temperaturänderung zwischen den beiden genannten Bereichen erfolgt also weniger abrupt, was sich als sehr günstig für das anschließende Ausformen, speziell bei Hochglanzfolien, erwiesen hat.

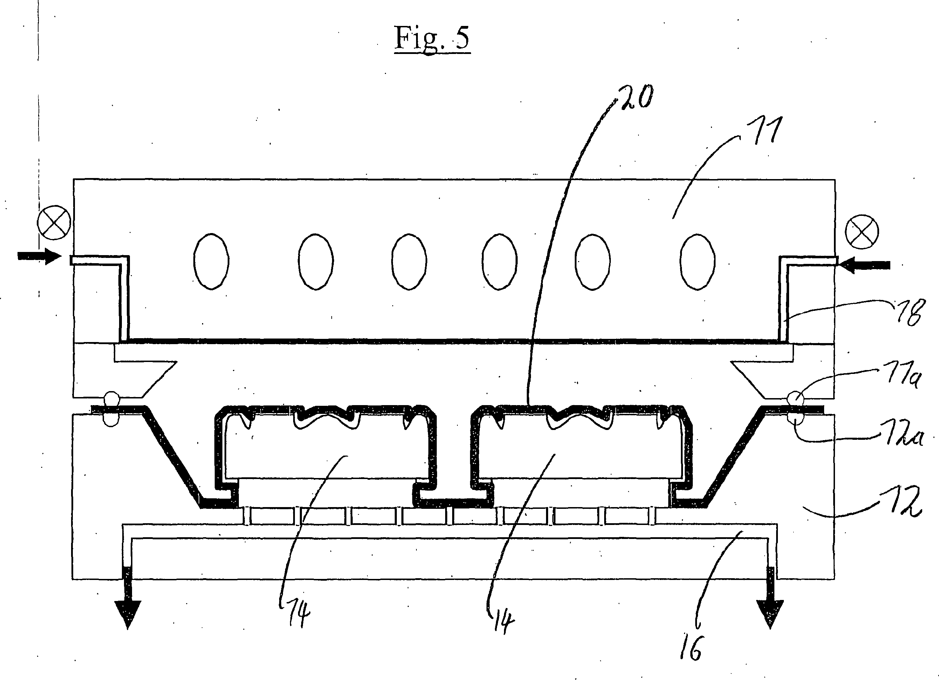

Figur 5 zeigt das folgende Verfahrensstadium. Es kann sich unmittelbar an das Abheben der Folie 20 von den Werkstücken anschließen; man kann die Folie 20 aber auch nach dem Abhebevorgang nochmal kurzzeitig auf den Werkstücken 14 ruhen lassen, bevor der Ausformvorgang gemäß Figur 5 beginnt. Der eigentliche Ausformvorgang erfolgt gemäß dem bekannten Stand der Technik, nämlich durch starke Überdruckbeaufschlagung des oberen Kanalsystems 18 und/oder Unterdruckbeaufschlagung des unteren Kanalsystems 16 mit der Folge, dass die Folie in die Zwischenräume zwischen den Werkstücken 14 hineingedrückt wird und sich vollflächig an die umlaufenden Seitenflächen der Werkstücke anlegt.

Danach werden die Werkstücke mitsamt der sie verbindenden Folie aus der Presse entnommen und durch Ausschneiden aus der Folie in bekannter Weise vereinzelt.

Soweit vorstehend von einem Anheben der Folie 20 von den Werkstücken 14 gesprochen worden ist, soll dies selbstverständlich auch die kinematische Umkehr einschließen, d.h., dass stattdessen die Folie ihre Position beibehalten kann und die Werkstücke abgesenkt werden. Auch eine Kombination beider Bewegungsvorgänge ist möglich. Entscheidend ist allein, dass der Kontakt zwischen der Folie und den Werkstückoberflächen gegen Ende der Aufheizphase kurzzeitig unterbrochen wird.

## Patentansprüche

1. Verfahren zur mehrseitigen Beschichtung von Werkstücken (14) mit Folie (20), insbesondere von Möbelteilen an deren Oberseite und Seitenflächen, wobei die Werkstücke (14) auf einem unteren Pressenteil (12) abgelegt werden, sodann die Folie (20) oberhalb der Werkstücke (14) in den Pressenspalt eingebracht, die Presse geschlossen und die Folie von oben beheizt wird, wobei die Folie (20) nach Erreichen eines vorgegebenen Temperaturbereiches durch oberseitigen Überdruck und/oder unterseitigen Unterdruck nicht nur an die Oberseite, sondern auch an die Seitenflächen der eingelegten Werkstücke (14) gedrückt und damit verklebt wird, wobei die Folle (20) zumindest teilweise vor dem Ankleben an die Werkstück-Seitenflächen kurzzeitig von den Werkstück-Oberseiten abgehoben und in der Schwebe gehalten wird,
**dadurch gekennzeichnet,**
**dass** die Folie (20) vor dem Abheben gezielt an die Werkstück-Oberseite gedrückt wird, dass das Abheben der Folie (20) durch unterseitigen Überdruck und/oder oberseitigen Unterdruck erzeugt wird und dass mit mehreren aufeinanderfolgenden Abhebevorgängen gearbeitet wird.

2. Verfahren nach Anspruch 1,
**dadurch gekennzeichnet,**
**dass** das Abheben der Folie (20) während einer Zeit von zumindest 3 Sekunden erfolgt.

3. Verfahren nach Anspruch 1,
**dadurch gekennzeichnet,**
**dass** das Abheben der Folie während einer Zeit von etwa 4 Sekunden bis etwa 20 Sekunden, vorzugsweise etwa 5 Sekunden bis etwa 10 Sekunden erfolgt.

4. Verfahren nach Anspruch 1,
**dadurch gekennzeichnet,**
**dass** beim Abheben der Folie (20) unterseitig Warmluft eingeblasen wird.

5. Verfahren nach Anspruch 1,
**dadurch gekennzeichnet,**
**dass** die Folie (20) auch in abgehobenem Zustand noch beabstandet zu der oberseitigen Heizung verläuft.

6. Verfahren nach Anspruch 1,
**dadurch gekennzeichnet,**
**dass** die Abhebevorgänge unmittelbar vor dem Ankleben der Folie an die Werkstück-Oberseite und -Seitenflächen erfolgen.

## Claims

1. Method for the multi-sided coating of workpieces (14) with film (20), especially for the coating of furniture components on their upper sides and side faces, wherein the workpieces (14) are deposited on a lower press part (12), the film (20) is then introduced into the press gap above the workpieces (14), the press is closed and the film is heated from above, and, once a preset temperature range has been reached, the film (20) is pressed by elevated pressure on the upper side and/or reduced pressure on the lower side not only against the upper side but also against the side faces of the inserted workpieces (14) and thus bonded thereto, at least part of the film (20), prior to being bonded to the side faces of the workpiece, being briefly lifted away from the upper sides of the workpiece and held suspended,
**characterised in that**
the film (20), prior to being lifted, is pressed specifically against the upper side of the workpiece, the lifting of the film (20) is generated by elevated pressure on the lower side and/or reduced pressure on the upper side, and a plurality of lifting operations take place in succession.

2. Method according to claim 1,
**characterised in that**
the lifting of the film (20) is effected for a period of at least 3 seconds.

3. Method according to claim 1,
**characterised in that**
the lifting of the film is effected for a period of from approximately 4 seconds to approximately 20 seconds, preferably from approximately 5 seconds to approximately 10 seconds.

4. Method according to claim 1,
**characterised in that**,
while the film (20) is being lifted, warm air is blown in at the underside.

5. Method according to claim 1,
**characterised in that**
the film (20), even while in the lifted state, remains spaced apart from the upper-side heating means.

6. Method according to claim 1,
**characterised in that**
the lifting operations are carried out immediately before the film is bonded to the upper side and side faces of the workpiece.

## Revendications

1. Procédé pour revêtir d'un film (20) des pièces (14) sur plusieurs faces, en particulier des éléments de meubles sur leur face supérieure et sur leurs faces latérales, sachant que les pièces (14) sont déposées sur une partie inférieure de presse (12), que le film (20) est ensuite introduit au-dessus des pièces (14) dans l'emprise de la presse, que la presse est fermée et que le film est chauffé par le dessus, sachant que le film (20) est, une fois atteinte une plage de température prédéfinie, par une surpression sur le dessus et/ou par une dépression sur le dessous, pressé et donc collé non seulement contre la face supérieure, mais aussi contre les faces latérales des pièces mises en place (14), sachant que le film (20) est au moins pour partie avant le collage contre les faces latérales de la pièce temporairement relevé à l'écart de la face supérieure de la pièce et maintenu en suspension,
**caractérisé en ce que** le film (20) est, avant ledit relèvement, pressé de manière ciblée contre la face supérieure de la pièce, **en ce que** le relèvement du film (20) est produit par une surpression sur le dessous et/ou par une dépression sur le dessus, et **en ce qu'**on opère avec plusieurs processus de relèvement successifs.

2. Procédé selon la revendication 1, **caractérisé en ce que** le relèvement du film (20) s'effectue pendant une durée d'au moins 3 secondes.

3. Procédé selon la revendication 1, **caractérisé en ce que** le relèvement du film s'effectue pendant une durée d'environ 4 secondes à environ 20 secondes, de préférence d'environ 5 secondes à environ 10 secondes.

4. Procédé selon la revendication 1, **caractérisé en ce que**, lors du relèvement du film (20), on insuffle de l'air chaud sur le dessous.

5. Procédé selon la revendication 1, **caractérisé en ce que** le film (20), dans l'état relevé également, s'étend encore à distance du chauffage situé sur le dessus.

6. Procédé selon la revendication 1, **caractérisé en ce que** les processus de relèvement s'effectuent juste avant le collage du film contre la face supérieure et les faces latérales de la pièce.
